# DEMANDE DE BREVET EUROPEEN

(11) **EP 3 675 592 A1**
(43) Date de publication de la demande: **01.07.2020**
(21) Numéro de dépôt: 19220123.4
(22) Date de dépôt: 30.12.2019
(51) Int. Cl.: H04W 76/14, H04W 72/04, H04W 84/00, H04W 92/20

(54) **ÉTABLISSEMENT D'UNE LIAISON D'ÉCHANGE DE DONNÉES SOUS PROTOCOLE IP ENTRE DES STATIONS DE BASE AMÉLIORÉES PAR COMMUNICATION DIRECTE**

(30) Priorité: 30.12.2018 FR 1874389
(71) Demandeur: Air Lynx, 91940 Les Ulis (FR)
(72) Inventeur: PISON, Laurent, 78760 Jouars Pontchartrain (FR); RAFFENOUX, Didier, 91400 Orsay (FR)
(74) Mandataire: A.P.I. Conseil

(57) **Abrégé**

Dans le domaine des systèmes de radiocommunication avec les mobiles basés sur la technologie cellulaire LTE établissement de liaisons en mode direct entre les stations de base de structures mobiles, pour l'échange de données sous protocole IP en lieu et placement des liaisons conventionnelles via les équipements fixes du cœur du réseau. A cet effet, il est proposé de dévoyer des ressources radio originellement prévues pour les communications établies entre une station de base et des terminaux de communication mobiles via l'interface LTE-Uu, afin de les utiliser pour l'établissement de liaisons en mode direct via des entités de liaison spécifiques qui équipent chacune des structures mobiles concernées.

## Description

La présente invention concerne de manière générale les systèmes de radiocommunication, basés par exemple sur la technologie cellulaire LTE. En particulier, elle concerne l'établissement de liaisons de transport de données sous protocole IP entre des stations de base, par exemple sur des structures mobiles, permettant de limiter les interférences. En particulier, elle concerne un système de communication directe entre des structures mobiles d'un tel réseau.

### [Art antérieur]

Les réseaux de télécommunication avec les mobiles, comme les réseaux cellulaires selon la norme LTE (« Long Term Evolution » selon une terminologie anglo-saxonne) définie par le consortium 3GPP et son évolution LTE-A (« Advanced LTE » selon une terminologie anglosaxonne), permettent d'établir des communications à haut débit entre des terminaux mobiles, avec une faible latence et une tolérance élevée aux déplacements relatifs des différentes entités mobiles qui forment le réseau. L'architecture de ces réseaux repose généralement sur un ensemble de stations de base, appelées eNodeB (de l'anglais « evolved Node B ») dans la norme LTE, qui sont des nœuds de réseau fixes formant la partie radio du réseau, appelée eUTRAN dans la norme LTE, et qui établissent des communications sans fil avec des terminaux mobiles, appelés UEs (de l'anglais « User Equipements ») dans la norme LTE, via une interface radio spécifique, appelée interface Uu dans la norme LTE. La partie radio d'un réseau LTE se compose des eNodeB, d'antennes locales ou distantes, de liaisons en fibres optiques vers les antennes distantes (liens par exemple **de type** CPRI (pour « Common Protocol Radio Interface »)) et des liaisons IP (pour « Internet Protocol » selon une terminologie anglosaxonne) reliant les eNodeB entre eux (interface X2) et avec le cœur de réseau (interface S1) via un réseau de backhaul.

La norme LTE est compatible avec le concept de cellule mobile, suivant lequel une station de base peut elle-même être mobile, comme étant installée dans une structure mobile (par exemple un véhicule de pompiers, ou un véhicule de type « command-car » des forces de sécurité, par exemple), afin de pouvoir projeter en tout lieu d'un territoire une cellule LTE capable de servir un groupe de terminaux mobiles LTE utilisés par les agents des forces de police, des pompiers, etc.

Les échanges inter-stations de base ou inter-UEs qui ont lieu au sein du réseau doivent nécessairement passer par le cœur du réseau, appelé EPC (de l'anglais « *Evolved Packet* Core ») dans la norme LTE. Autrement dit, les stations de base et les UEs du réseau ne peuvent pas communiquer directement entre elles, mais uniquement par l'intermédiaire des interfaces LTE, via le EPC.

Dans certains cas, toutefois, il peut être souhaitable d'établir une liaison de communication entre deux équipements donnés du réseau sans passer par un cœur de réseau commun, notamment si le lien entre une station de base et le cœur du réseau est perdu ou non fonctionnel. Un cas d'usage typique est par exemple celui des forces de sécurité et de secours (police, pompiers, ambulances, etc.) qui doivent pouvoir collaborer et communiquer entre elles suite par exemple à une catastrophe naturelle, comme un tremblement de terre ou un raz de marée ayant pour conséquence immédiate la mise hors service des installations de communication à terre qui participent au réseau de communication. Il existe donc le besoin d'une solution permettant de mettre en place des liaisons d'échange de données sous protocole IP entre des stations pour pallier la défaillance du réseau standard et/ou des équipements du cœur de réseau.

En résumé, notamment mais pas uniquement dans le contexte évoqué ci-dessus, il peut être utile pour des applications spécifiques d'établir des liaisons de communication entre stations de base, ou nœud, afin de rendre les échanges de données entre ces stations de base autonomes par rapport au reste du réseau standard.

Le brevet français FR 3033121 divulgue une station de base comprenant un module d'interface radio adapté pour émettre et recevoir des données radiofréquences, et un bloc pilote adapté pour établir une liaison de communication et communiquer sur ladite liaison avec au moins un premier terminal utilisateur conformément à un protocole radio comprenant une section de protocole radio propre aux stations de base et une section de protocole radio propre aux terminaux utilisateurs, en utilisant ledit module d'interface radio. La station de base est caractérisée en ce qu'elle comprend en outre une unité de gestion adaptée pour créer une pluralité de terminaux utilisateurs virtuels adaptés pour communiquer conformément audit protocole radio avec des stations de base voisines de ladite station de base, en utilisant ledit module d'interface radio. Une telle station de base permet de créer un réseau maillé de stations de base, et de transmettre directement entre stations de base des données selon par exemple le protocole de l'interface LTE-Uu pour des stations de base LTE (i.e., des eNodeBs).

Dans un tel système, toutefois, lorsqu'une station de base communique avec un terminal virtuel associé à une station de base voisine, elle le fait sur la même bande de fréquence que celle qu'elle utilise déjà pour communiquer avec les terminaux mobiles présents dans sa cellule mobile. Dit autrement, les différentes stations de base qui sont reliées entre-elles au sein du réseau de backhaul maillé ainsi formé, utilisent le même spectre de fréquence pour échanger des données entre elles que le spectre de fréquence utilisé pour des communications cellulaires avec les terminaux mobiles dans leur cellule mobile respective. En outre, ces communications cellulaires se font toutes par l'intermédiaire de modules d'interface radio eux aussi identiques, à savoir l'interface LTE-Uu et l'interface LTE-Un (qui est une interface dédiée aux relais, le cas échéant).

De ce fait, les risques d'interférences entre liens radio sont élevés. En effet, le fonctionnement des communications cellulaires avec des terminaux mobiles d'utilisateurs au sein de la cellule associée à une première structure mobile donnée peut être perturbé par les liens radio de type backhaul établis entre des terminaux virtuels associés à la station de base qui couvre cette cellule mobile, d'une part, et une station de base appartenant à une autre structure mobile, d'autre part.

### [Problème technique]

L'invention a pour but de remédier aux inconvénients de l'art antérieur. En particulier, l'invention a pour but de proposer un système de communication, ledit système étant capable d'établir un réseau de type backhaul permettant une communication sous protocole IP pour relier les applications et services IP des structures mobiles. En outre, ce procédé doit permettre la mise en place rapide de la liaison avec un risque réduit d'interférence et cela malgré la mise en communication de plusieurs structures mobiles tout en permettant de fonctionner sur le spectre disponible. L'invention a en outre pour but de proposer un procédé capable d'établir une liaison de transport de données sous protocole IP entre au moins deux stations de base améliorées, ladite liaison permettant un réseau de type backhaul pour une communication sous protocole IP permettant de relier les applications et services IP de structures éloignées et non reliées par un réseau filaire de communication.

### [Brève description de l'invention]

A cet effet, un premier aspect de l'invention propose un système de communication comprenant au moins deux stations de base améliorées ayant chacune des terminaux de communication mobiles et au moins une station de base qui est adaptée pour établir des liaisons de communication cellulaire avec lesdits terminaux de communication mobiles de la station de base améliorée via une interface radio déterminée en allouant des ressources radio auxdites liaisons de communication cellulaire parmi un ensemble de ressources radio disponibles, dans lequel chaque station de base améliorée comprend en outre une entité de liaison configurée pour établir une liaison en mode direct avec l'entité de liaison de l'autre station de base améliorée; et, dans lequel la station de base d'une station de base améliorée au moins est configurée pour exclure de l'allocation à des liaisons de communication cellulaire, une partie des ressources radio disponibles, et pour affecter des ressources radio ainsi exclues à l'allocation à une liaison en mode direct établie avec la station de base de l'autre station de base améliorée par l'intermédiaire des entités de liaison respectives desdites stations de base améliorées, pour l'échange de données sous protocole IP entre lesdites stations de base, via une interface radio distincte de l'interface radio utilisée pour les liaisons de communication cellulaire.

L'invention permet ainsi d'utiliser une partie des ressources radio disponibles à l'eNodeB d'une station de base évoluée d'une station de base améliorée pour communiquer avec des terminaux présents dans sa cellule, afin d'établir des liaisons en mode direct entre la station de base améliorée correspondante et une ou plusieurs autres stations de base améliorées. Un réseau backhaul entre différentes stations de base améliorées peut ainsi être établi, le cas échéant avec une topologie maillée, par exemple, par l'intermédiaire d'entités de liaison prévues dans chacune des stations de base améliorées concernées, et qui peuvent être des terminaux spécifiquement dédiés à ces liaisons en mode direct. Ainsi, l'invention propose une alternative basée sur l'établissement de liaisons en mode direct entre des stations de base utilisant un spectre de fréquence commun, afin de créer un réseau backhaul pour l'échange de données sous protocole IP entre lesdites stations de base, et permet donc de se passer de l'infrastructure fixe du réseau standard et cela sans utilisation de technologie annexe (e.g. wimesh). En outre, il n'est pas nécessaire de dédier un spectre spécifique au backhaul et c'est le même spectre sur tous les nœuds ou stations de base améliorées. L'entité de liaison permet d'éviter les problèmes d'interférences. De façon préférée, les stations de bases améliorées du système selon l'invention ne sont pas reliées par un réseau de communication filaire.

En outre, un tel système peut intégrer sans modification la plupart des techniques permettant des gains de couverture ou débit pour la technologie de communication utilisée comme par exemple dans le cas du LTE, le MCS (pour « Modulation Code Scheme » en terminologie anglosaxonne) et le MIMO (pour « Multiple Input Multiple Output » en terminologie anglosaxonne). De même, les différents modes tels que duplex TDD ou FDD du LTE sont supportés.

### Selon d'autres caractéristiques optionnelles du système de communication :

- L'interface radio est sélectionnée parmi toute interface radio permettant d'allouer des ressources radio comprenant des Blocs Radios. En effet, la présente invention sera décrite dans un contexte de communication de type LTE mais elle peut être appliquée à de nombreux autres protocoles tels que ceux permettant des liaisons de communication cellulaire par exemple ceux répondant à un codage OFDM (pour « Orthogonal frequency-division multiplexing » en terminologie anglosaxonne) ou un codage dérivé tel que OFDMA ou SC-FDMA (pour « Orthogonal Frequency-Division Multiple Access » et « single-carrier frequency division multiple access » en terminologie anglosaxonne). Les Blocs Radios peuvent être tels que définis dans la norme LTE du consortium 3GPP. Cela permet avantageusement de faciliter la segmentation des ressources, notamment de dédier seulement une partie desdits Blocs Radios aux terminaux mobiles (communication Uu) en fonction du temps. Ainsi, de façon préférée, tout ou partie des Blocs Radio dédiés à l'origine à du transfert de donnée en UL (de l'anglais « UpLink ») ou en DL (de l'anglais « DownLink ») pour des utilisateurs de type Uu (LTE) à partir d'une station de base sont affectés à la liaison en mode direct.
- il comprend une station de base améliorée dont l'entité de liaison est un terminal de liaison comprenant des ressources matérielles et des ressources logicielles propres. Ainsi, la liaison en mode direct peut être plus puissante de façon à par exemple atteindre des structures ou stations de base plus éloignées ou d'augmenter la quantité de données pouvant être échangées entre les stations de base améliorées. En outre, cela permet de réutiliser la technologie existante et ne nécessite pas l'intégration de technologie de codage complexe pour gérer les interférences.
- il comprend en outre une station de base améliorée dont l'entité de liaison est un terminal de liaison comprenant des ressources logicielles mises en œuvre dans la station de base de ladite station de base améliorée, ainsi que des ressources matérielles de ladite station de base. Il n'est alors pas nécessaire de disposer d'un dispositif supplémentaire dédié à l'établissement de la liaison en mode direct. Dans ce cas de façon préférée, les ressources matérielles peuvent comporter une antenne dont la puissance dédiée à la station de base améliorée sera supérieure à la puissance dédiée aux communications avec les terminaux mobiles. L'entité de liaison peut aussi être un terminal virtuel comprenant exclusivement des ressources logicielles mises en œuvre dans la station de base de ladite station de base améliorée, ainsi que des ressources matérielles de ladite station de base. Ainsi, il ne nécessite pas de ressources matérielles supplémentaires sur le relai radio excepté un smartphone ou un modem radio.
- l'interface radio utilisée pour établir une liaison en mode direct entre la station de base d'une station de base améliorée et la station de base de l'autre station de base améliorée via les entités de liaison respectives desdites stations de base améliorées, comprend des ressources radio détournées des canaux descendants de l'interface radio utilisée pour les liaisons de communication cellulaire. Cela permet d'optimiser l'utilisation des ressources disponibles et ainsi, la quantité d'informations échangée via la liaison en mode direct est plus importante, notamment grâce à une augmentation du débit disponible et/ou à l'augmentation des liens de transport de données.
- une station de base de chaque station de base améliorée est configurée pour établir des liaisons en mode direct avec les stations de base respectives d'une pluralité d'autres stations de base améliorées, via les entités de liaison respectives desdites stations de base améliorées.
- les entités de liaison de la pluralité de stations de base améliorées peuvent former entre elles un réseau de backhaul permettant d'établir une topologie maillée.
- une station de base d'une station de base améliorée est configurée pour établir une liaison en mode direct avec les stations de base respectives d'une pluralité d'autres stations de base améliorées, via les entités de liaison respectives desdites stations de base améliorées, suivant une configuration multicast. Ainsi, la signalisation entre entités de liaison peut en être facilitée et améliorée.
- Il comprend des ressources radio de la station de base d'une station de base améliorée qui sont exclues de l'allocation à des liaisons de communication cellulaire avec des terminaux de communication mobile de ladite station de base améliorée, qui sont subdivisées en au moins deux, de préférence au moins trois ensembles de ressources radio, qui peuvent être allouées pour chaque ensemble de ressources radio à des liaisons en mode direct avec la station de base de l'une respective des autres stations de base améliorées. Ces liaisons en mode direct avec la station de base de l'une respective des autres stations de base améliorées se font en particulier par l'intermédiaire des entités de liaison. Ainsi, le format des ressources de la technologie de communication employée est réutilisé sans impact sur les terminaux utilisateurs utilisant des communications de type Uu.
- les liaisons entre les stations de base respectives de stations de base améliorées qui sont établies en mode direct via les entités de liaison desdites stations de base améliorées, sont utilisées en mode semi duplex (en anglais « half duplex ») avec partage, symétrique ou asymétrique, du temps d'émission et de réception pour chaque entité de liaison. Par exemple le partage du temps peut être asymétrique selon un ratio d'un tiers du temps pour l'émission pour deux tiers du temps pour la réception. Un tel partage permet avantageusement d'améliorer « le temps réel » nécessaire à l'émission de données entre une station de base et une entité distante. Alternativement, les liaisons entre les stations de base respectives de stations de base améliorées qui sont établies en mode direct via les entités de liaison desdites stations de base améliorées, sont utilisées en mode full duplex via deux liens half duplex entre les mêmes stations de base améliorées.
- une station de base améliorée comprend en outre une entité de commande qui est configurée pour commander l'allocation, par la station de base de ladite station de base améliorée, des ressources radio de ladite station de base à la fois pour les liaisons de communication cellulaire avec des terminaux de communication mobiles de la station de base améliorée en utilisant l'interface radio de ladite station de base, et pour une liaison en mode direct pour l'échange de données sous protocole IP avec la station de base d'une autre station de base améliorée au moins.
- Au moins une des stations de base améliorées est placée sur une structure mobile, de préférence chacune des stations de base améliorées sont placées sur des structures mobiles respectives. Etant donné que le système permet d'établir une liaison entre station de base sans backhaul filaire nécessaire il est particulièrement bien adapté à des systèmes comportant des structures mobiles (véhicule, drone, ...) ou nomadiques. Ainsi, de façon préférée, le système selon l'invention comprend une structure mobile comprenant une station de base améliorée qui comprend la station de base et l'entité de liaison de la station de base améliorée.

Selon un autre aspect, l'invention porte sur un procédé d'établissement d'une liaison pour l'échange de données sous protocole IP entre des stations de base respectives de stations de base améliorées ayant chacune des terminaux de communication mobile et au moins une station de base qui est adaptée pour établir des liaisons de communication cellulaire avec des terminaux de communication mobiles de la station de base améliorée via une interface radio déterminée en allouant des ressources radio auxdites liaisons de communication cellulaire parmi un ensemble de ressources radio disponibles, ledit procédé comprenant les étapes suivantes :
- émission par une entité de liaison d'une première station de base améliorée, d'un premier message d'identification/authentification à destination d'une entité de liaison d'une seconde station de base améliorée, ledit message étant émis en utilisant des ressources radio de la station de base de la première station de base améliorée qui appartiennent à une partie (et une partie seulement) des ressources radio de la station de base de la première station de base améliorée qui sont exclues de l'allocation par ladite station de base à des liaisons de communication cellulaire avec des terminaux de communication mobile de ladite station de base améliorée ;
- réception, par l'entité de liaison de la première station de base améliorée, d'un second message d'identification/authentification qui est émis en réponse par l'entité de liaison de la seconde station de base améliorée en utilisant des ressources radio d'une station de base de la seconde station de base améliorée qui sont exclues de l'allocation par ladite station de base à des liaisons de communication cellulaire avec des terminaux de communication mobile de la seconde station de base améliorée;
- transmission, par l'entité de liaison de la première station de base améliorée, du second message d'identification/authentification à une entité de commande de la première station de base améliorée et vérification par ladite entité de commande de la validité des données associées audit second message d'identification/authentification ; et, en cas de validité,
- établissement d'une liaison en mode direct entre la station de base de la première station de base améliorée et la station de base de la seconde station de base améliorée, par l'intermédiaire des entités de liaison respectives desdites première et seconde stations de base améliorées, pour l'échange de données sous protocole IP entre lesdites stations de base, en utilisant des ressources radio, de la station de base, qui sont exclues de l'allocation par ladite station de base à des liaisons de communication cellulaire avec des terminaux de communication mobile desdites stations de base améliorées.

### Selon d'autres caractéristiques optionnelles du procédé :

- Il comporte, avant l'étape d'émission d'un premier message d'identification/authentification, une étape d'émission un message de découverte, par exemple en mode multicast, les étapes suivantes étant initiées à réception d'une réponse d'une autre station de base améliorée. Cette étape peut notamment être répétée périodiquement jusqu'à réception d'une réponse.
- lors de l'étape d'établissement de la liaison en mode direct, il y a établissement d'un partage du temps d'émission et de réception pour chaque entité de liaison. Ce partage peut être symétrique ou asymétrique et de préférence asymétrique.
- les messages d'identification/authentification échangés entre des entités de liaison sont basés sur des données contenues dans des bases de données de type HSS d'EPC locaux respectivement compris dans des stations de base améliorées des première et seconde structures mobiles qui comprennent la station de base et les terminaux de communication mobile desdites première et seconde structures mobiles respectivement.

D'autres avantages et caractéristiques de l'invention apparaitront à la lecture de la description suivante donnée à titre d'exemple illustratif et non limitatif, en référence aux figures des dessins annexés dans lesquels :
**[****Fig 1****]** est un schéma fonctionnel illustrant un mode de réalisation d'un système de communication directe entre deux structures mobiles selon l'invention ;
**[****Fig. 2****]** est un schéma illustrant la répartition des blocs radios utilisés pour les communications selon des modes de réalisation de l'invention sachant que ces blocs radios ne sont pas forcément contigus et pas forcément complets ; et,
**[****Fig. 3****]** est un diagramme d'étapes d'un mode de mise en œuvre du procédé selon l'invention.

### [Description de l'invention]

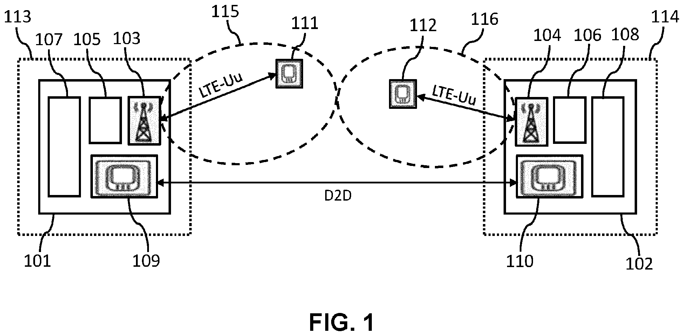

En référence au schéma de **la** **figure 1****,** il va tout d'abord être décrit un mode de réalisation d'un système de radiocommunication mobile ayant des structures mobiles selon l'invention.

Les termes « structure mobile » désignent une entité qui comprend des moyens de communications cellulaire avec des terminaux d'utilisateur appartenant à la structure mobile, et qui est elle-même mobile c'est-à-dire qu'elle peut être en mouvement, stationnaire (i.e., immobile) ou nomade (i.e., alternant des phases de mobilité et des phases stationnaires).

Les structures mobiles peuvent correspondre, plus généralement, à toute infrastructure fixe terrestre et/ou navale, c'est-à-dire ne disposant pas de moyens matériels adaptés pour se mouvoir, ou encore à toute structure mobile terrestre et/ou navale disposant de moyens adaptés pour se mettre en mouvement, stationnaire (i.e., immobile) ou nomade (i.e., alternant des phases de mobilité et des phases stationnaires). Avantageusement, les structures mobiles selon l'invention ne sont pas connectées par des liaisons filaires.

Le terme « direct » utilisé de manière générale en référence à des modes de communication entre deux entités, signifie qu'aucune entité intermédiaire n'intervient dans ces communications pour le transport de données entre l'entité émettrice et l'entité réceptrice. Lorsqu'il est utilisé de manière particulière en référence à un mode de communication entre des structures mobiles telles que définies ci-dessus, le terme « direct » signifie que le transport de données entre deux structures mobiles se fait sans l'intervention du cœur de réseau par l'intermédiaire duquel ces structures mobiles établissent normalement leurs communications.

Dans l'exemple représenté à la figure 1, les structures mobiles 113 et 114 sont chacune équipées de stations de bases améliorées 101 et 102. Ces stations de base améliorées 101 et 102 comprennent en effet chacune au moins une station de base 103 et 104, respectivement, comme par exemple les entités appelées eNodeB (de l'anglais « *evolved Node B* ») dans le contexte des systèmes LTE. Chacune des stations de base améliorées 101 et 102 comprend aussi un cœur de réseau local 105 et 106, respectivement, comme par exemple un cœur de réseau appelé EPC (de l'anglais « *evolved Packet Core* ») dans les normes LTE. Enfin, chacune des stations de base améliorées 101 et 102 comprend une entité de commande 107 et 108 appelée RRCE (mis pour « *Radio Resource Coordination Entity* » en anglais) et un terminal de liaison dédié 109 et 110, respectivement, comme un terminal appelé dUE (mis pour *« dedicated User Equipment* » en anglais) dans le contexte des systèmes LTE. Comme il sera explicité plus en détail plus loin, ces terminaux de liaison sont spécifiquement dédiés à l'établissement d'au moins une liaison de type backhaul entre les deux stations de bases améliorées 101 et 102 qui servent les structures mobiles 113 et 114, respectivement.

Dans les cas d'usage en stationnaire, c'est-à-dire lorsqu'une telle structure mobile ne bouge pas, la station de base évoluée est capable de communiquer sous protocole IP avec des équipements de réseau fixe, par l'intermédiaire desquels elle peut échanger des données avec la station de base évoluée d'un autre système mobile. Lorsque le système mobile est en mouvement mais demeure à portée radio d'un tel équipement de réseau fixe, ces communications sont également possibles et sont donc utilisées.

Inversement, les liaisons visées par l'invention sont des liaisons qui sont établies, conformément à des modes de réalisation, entre des structures mobiles lorsqu'elles sont en mouvement et se trouvent ensemble à des distances au-delà de la portée radio des stations de base embarquées avec les équipements de réseau fixe. Ainsi, par exemple, comme il sera aussi présenté plus en détails plus loin, deux navires se déplaçant en haute mer peuvent, par la mise en œuvre de l'invention, mettre en place une liaison de communication directe entre eux. En outre, l'exemple représenté à la figure 1 n'est pas limitatif, et l'homme du métier appréciera que l'invention peut s'appliquer à un nombre de structures supérieur ou égal à deux.

Les eNodeB 103 et 104 intégrées aux stations de bases améliorées 101 et 102, respectivement, sont par exemple des stations de base telles qu'elles sont couramment utilisées dans les réseaux de radiocommunication mobile basés sur les normes LTE du consortium 3GPP. De façon connue de l'homme du métier, et conformément aux normes LTE, elles constituent la passerelle entre le cœur du réseau LTE de transport de données par protocole IP, d'une part, et les terminaux de communication mobiles, ou équipements utilisateurs UEs (de l'anglais « *User Equipment* ») 111 et 112, d'autre part. En particulier, les eNodeBs desservent des zones géographiques définies par l'étendue de leur couverture radio. Ces zones géographiques forment les cellules radio 115 et 116 au sein desquelles des communications radios sont établies entre chaque eNodeB et les terminaux de communication mobiles (i.e. les UEs) 111 et 112 qui lui sont raccordés par des liaisons de communication cellulaire. Pour des raisons de lisibilité, les deux cellules représentées à la figure 1 et respectivement associées à l'eNodeB 103 et à l'eNodeB 104, ne comprennent qu'un seul UE chacune. Toutefois, l'homme du métier appréciera là-encore que le nombre de terminaux mobiles présents dans chaque cellule peut évidemment être supérieur à un.

Au sein d'une cellule, les communications radio se font sur une bande de fréquence (i.e. un spectre de fréquence) déterminée, centrée autour d'une fréquence F₀ et qui présente une largeur spectrale déterminée, typiquement de plusieurs Mégahertz. Par exemple, une largeur spectrale de 3, 5, 10, 15 ou 20 Mégahertz. De plus, dans des modes de réalisation particuliers de l'invention, chaque eNodeB peut réaliser ses propres échanges radio sur un spectre de fréquence spécifique. Avantageusement mais non limitativement, chaque eNodeB peut réaliser ses propres échanges radio sur un même spectre de fréquence spécifique, commun à chacun desdits eNodeB. Ceci étant, dans tous les cas, les spectres de fréquence utilisés par les eNodeBs sont ceux tels qu'ils sont définis par la norme LTE du consortium 3GPP.

Les eNodeB 103 et 104 utilisent des interfaces radio LTE-Uu pour établir des liaisons de communication cellulaire avec l'ensemble des UEs qui sont présents dans la cellule qu'elles servent. Les terminaux présents dans les cellules respectivement associées aux différents eNodeB peuvent donc être des terminaux LTE standards. Autrement dit, des terminaux qui ne nécessitent aucune capacité spécifique pour pouvoir être utilisés dans ce contexte. En particulier, ces terminaux peuvent être entièrement compatibles avec les normes LTE du consortium 3GPP.

Additionnellement, les eNodeBs 103 et 104 utilisent des interfaces LTE-S1 pour communiquer avec le cœur du réseau EPC par des liens de type backhaul. Un lien de type backhaul désigne un lien utilisé pour relier le cœur d'un réseau LTE et les nœuds (i.e., les stations de base) de ce réseau. L'ensemble des liens de ce type forment ce que l'on appelle un réseau intermédiaire, ou réseau backhaul. Ces liens peuvent être filaires (par exemple par une fibre optique ou un câble) ou non filaire (par exemple par faisceau hertzien). Les échanges sur ces liens sont basés sur le protocole IP. En outre, le nombre de lien possible est multiplié par le nombre de secteur disponibles sous le eNodeb. En effet, un eNodeb peut supporter plusieurs cellules de même fréquences F0 ou plusieurs cellules dans chaque fréquence F0 à Fn.

Les EPC locaux 105 et 106 compris dans chacun des stations de bases améliorées 101 et 102, respectivement, intègrent quant à eux toutes les fonctions connues liées au cœur d'un réseau mobile LTE. En particulier, ils intègrent des MMEs (de l'anglais « *Mobility Management Entity* »), des passerelles de service SGW (de l'anglais « *Serving Gateway* »), des passerelles de transport de données PGW (de l'anglais « *Packet Gateway* ») et une base de données de type HSS (de l'anglais « *Home Subscriber Server* ») qui contient la plupart des informations utiles qui sont relatives aux utilisateurs du réseau comme, par exemple, la localisation d'un utilisateur et/ou son identification/authentification.

Les entités de type RRCE 107 et 108, elles aussi comprises dans chacune des stations de bases améliorées 101 et 102, respectivement, gèrent et pilotent l'utilisation des ressources radios faites par chaque station de base évoluée. En effet, comme il apparaîtra plus clairement de la description qui sera donnée plus loin, un spectre de fréquence unique est utilisé par chaque station de base améliorée à la fois, pour établir les communications entre la station de base eNodeB correspondante et les UEs au sein de la cellule couverte par cette eNodeB, et pour mettre en œuvre, le cas échéant, un lien direct, par une liaison de type backhaul, entre deux stations de bases améliorées de deux structures mobiles distinctes respectives. Les RRCEs contrôlent donc l'allocation des ressources radio (i.e., leur répartition) entre, d'un côté, le réseau LTE dans son ensemble et, de l'autre côté, des liens directs de type backhaul supportant le protocole IP entre différentes structures mobiles.

Enfin, outre les entités déjà mentionnées qui sont intégrées aux stations de bases améliorées de chaque structure mobile, celles-ci intègrent aussi des équipements d'utilisateur dédiés ou dUEs. Comme il a déjà été évoqué plus haut, les dUEs permettent d'établir des liaisons directes de type backhaul entre deux stations de bases améliorées. Plus précisément, il s'agit de liens en mode direct, c'est-à-dire sans intermédiaire, dits « *device-to-device* » et notés D2D dans la suite. De tels liens directs sont rendus possibles par l'utilisation de terminaux dédiés d'un type particulier, à savoir les terminaux de liaison dUEs déjà présentés plus haut, qui sont spécifiquement adaptés à cette utilisation. On parle aussi de communications en mode direct. Les liens utilisés sont de type point-à-point et, dans le contexte de l'invention, requièrent une forte puissance pour permettre d'établir une connexion entre deux structures mobiles (donc deux stations de bases améliorées) qui sont potentiellement assez éloignées l'une de l'autre.

Typiquement les dUEs sont équipés d'une antenne couplée à un amplificateur dont la puissance est de plusieurs dizaines de Watts, permettant ainsi de ne pas rajouter de ressources matérielles supplémentaires par rapport à l'équipement déjà utilisés par le nœud (eNB). Ainsi, il est possible d'utiliser le matériel de l'eNB tels que l'unité de traitement radiofréquence et puissance, l'antenne et le mat dans le cas d'un navire. Par exemple, cette puissance est supérieure ou égale à 10 Watts, de préférence supérieure ou égale à 15 Watts, telle qu'une puissance supérieure ou égale à 20 Watts.

En effet, il est courant pour une station de base, qu'elle soit mobile ou non, de comporter un système antennaire avec plusieurs antennes d'émission/réception de signaux radiofréquence. Chacune, ou un groupe parmi l'ensemble des antennes de la station de base formant son système antennaire peut desservir une zone de couverture radio, appelée cellule, qui lui est propre. De plus, les antennes d'un tel système antennaire étant des antennes directives, leurs zones de couverture radio respectives sont des subdivisions de la zone de couverture radio totale de la station de base. Plus particulièrement, ces subdivisions sont des secteurs angulaires de la zone de couverture radio totale de la station de base. On parle alors de système antennaire multi-secteur, chaque secteur antennaire correspond à un secteur angulaire déterminé, et étant desservi par une antenne respective ou un groupe d'antennes respectif du système antennaire. Chaque secteur antennaire utilisant des ressources radio propres, notamment une ou plusieurs bandes de fréquence définie chacune par une fréquence centrale et une largeur de bande, un secteur antennaire définit une cellule au sens radio. Chaque secteur peut aussi utiliser une fréquence une commune à un ou plusieurs autres secteurs angulaires du même nœud.

Typiquement, le système antennaire d'une station de base d'un réseau de télécommunications mobiles peut se composer d'une pluralité d'antennes, couvrant chacune un secteur angulaire par exemple de 90°. La zone de couverture radio d'une telle station de base s'étend donc dans toutes les directions (i.e. à 360°) autour de cette station de base avec par exemple quatre portions d'ouvertures angulaires égales, de la zone de couverture radio totale, couvertes par quatre antennes différentes, respectivement. En conséquence, les terminaux de communications mobiles, situés dans la zone de couverture radio d'une station de base, établissent une liaison de communication cellulaire spécifiquement avec l'antenne du système antennaire qui couvre le secteur angulaire précis dans lequel ils se trouvent. En outre, le système antennaire peut également comporter d'autre antennes permettant de couvrir, au-delà du plan horizontal, des secteurs verticaux. La zone de couverture radio est alors de préférence définie en 3 dimensions.

De plus, lorsque l'établissement d'une liaison de transport de données de type backhaul est réalisé entre la station de base d'une structure mobile et un équipement utilisateur dédié d'une structure mobile tierce, ladite liaison se fait plus particulièrement entre l'équipement utilisateur dédié de la structure mobile tierce d'une part, et l'antenne du système antennaire de la station de base qui couvre le secteur angulaire précis dans lequel il se trouve, d'autre part.

En résumé, toute liaison de communications radio d'une station de base, c'est-à-dire aussi bien une liaison de communication cellulaire qu'une liaison de transport de données de type backhaul, implique des échanges de données entre l'entité (terminal de communication mobile ou équipement utilisateur dédié, respectivement) avec laquelle cette liaison est établie, d'une part, et une antenne unique du système antennaire de la station de base, d'autre part, laquelle est déterminée par la position angulaire relative de l'entité par rapport à la station de base.

Dans le cas où la station de base est mobile (i.e. dans le cas où elle appartient à une structure qui est elle-même une structure mobile), la configuration spatiale des liaisons de communication radio de ladite station de base peut évoluer en fonction du temps, de manière parfois importante. En effet, la configuration spatiale des liaisons de communication radio d'une station de base découle directement de l'agencement de toutes les entités situées dans sa zone de couverture radio. Ainsi, lorsque la station mobile est en mouvement ou lorsque les entités avec lesquelles elle a établi des liaisons de communication radio sont en mouvement, la distribution des liaisons de communication radio entre les différentes antennes du système antennaire d'une station de base peut varier sensiblement. Par exemple, une entité peut entrer dans ou sortir d'un secteur angulaire de la zone de couverture radio de la station de base, en sortant de ou en entrant dans un autre secteur angulaire, respectivement. En outre, le nombre d'entités, dans un secteur angulaire déterminé, avec lesquelles la station de base est susceptible d'établir une liaison de communication radio peut augmenter ou diminuer au cours du temps, de manière parfois substantielle.

Or, le passage d'une entité, ayant une liaison de communication radio avec une station de base, de la zone de couverture radio d'une de ses antennes à la zone de couverture radio d'une autre de ses antennes, peut nécessiter des opérations complexes et consommatrices de ressources. Toutes les opérations qui permettent le passage d'une telle entité d'une cellule à une autre sans que la liaison de communication radio ne soit interrompue sont regroupées sous l'appellation *« handover»* (ou en français *«transfert intercellulaire* »). Ainsi, l'utilisation d'une station de base dans une structure mobile, peut impliquer des handover complexes et relativement fréquents du fait en particulier de la mobilité de la station de base.

En outre, au cours du *handover* d'une entité depuis l'une de ses cellules vers une autre de ses cellules, chaque station de base doit gérer l'attribution de ressources radio faite à cette liaison dans chaque cellule pour en assurer la continuité. Dit autrement, au sein du spectre de fréquence total utilisé par la station de base pour toutes ses liaisons de communication radio, l'entité de commande qui supervise la gestion des ressources radio et la réalisation des *handover* doit attribuer à chacune de ses liaisons, une ou plusieurs bandes de fréquence de ce spectre, qui permettent de conserver des capacités sensiblement identiques pour cette liaison, quel que soit le secteur angulaire dans lequel ladite liaison est effectivement établie à chaque instant.

En résumé, la mobilité d'une station de base avec un système antennaire multi-secteurs d'une structure mobile génère une complexité accrue dans la gestion des ressources radio pour tenir compte des besoins réels de toutes les liaisons de communication radio établies dans tous les différents secteurs angulaires de sa zone de couverture radio. Cette complexité peut être d'autant plus pénalisante que, quel que soit le type de liaison de communication radio concerné (liaison de communication cellulaire ou liaison de transport de données de type backhaul), la modification de leur configuration spatiale peut être fréquente.

L'homme du métier appréciera que les terminaux de liaison dUE peuvent être des entités physiques indépendantes, c'est-à-dire disposant des ressources logicielles et des ressources matérielles nécessaires à la réalisation de sa fonction. Les ressources matérielles dont il s'agit comprennent notamment des antennes, des amplificateurs, des modems, ou encore un scanner radio etc. (i.e., des Tx/Rx) pour l'émission et la réception de signaux radio. En variante, certains au moins des dUE peuvent toutefois être des entités virtualisées, et utiliser alors des ressources physiques de l'eNodeB de la station de bases améliorée à laquelle ils appartiennent. Un tel terminal virtuel comprend des ressources logicielles mise en œuvre dans cette station de base améliorée, ainsi que des ressources matérielles de ladite station de base.

Dans des modes de réalisation particuliers de l'invention, les liaisons en mode direct peuvent être établies en mode Sidelink sur l'interface PC5, par exemple, tels qu'ils sont connus dans les normes LTE (voir chapitre 9, à partir de l'édition 12.5 de la norme LTE-A) pour les communications directes entre terminaux mobiles, dites communications « device-to-device » dans la norme LTE-A. Le mode Sidelink et l'interface PC5 ont été initialement prévues pour les forces de sécurité comme la police, les pompiers et les ambulances pour des applications dans le domaine des radiocommunications mobiles professionnelles ou PMR (de l'anglais *« Professional Mobile Radiocommunications* »). Le mode Sidelink et l'interface PC5 utilisent des ressources radios originellement allouées aux communications montantes, sur une liaison de type UpLink ou UL (i.e. dont le format de modulation est spécifique aux communications depuis un terminal vers une station de base), pour les attribuer aux échanges inter-terminaux en mode direct D2D.

Toutefois, l'utilisation du mode Sidelink et de l'interface PC5 imposent des contraintes importantes en termes de ressources utilisables pour ces communications. En particulier, le nombre de blocs radio (ainsi qu'il sera explicité plus loin), la puissance ou encore le débit associés à une communication donnée sont limités par les normes LTE.

C'est pourquoi, dans un mode de réalisation préféré de l'invention, les communications en mode direct établies entre deux stations de base améliorées ne s'effectuent pas selon le mode Sidelink. On utilise à la place, de préférence, un protocole propriétaire qui peut se présenter comme une variante du mode Sidelink des normes LTE, et qui intègre des modifications spécifiques se départissant de ces normes. Par exemple, il est possible d'utiliser des ressources radios originellement allouées aux communications descendantes, sur une liaison de type DonwLink ou DL (i.e. dont le format de modulation est spécifique aux communications depuis une station de base vers un terminal), pour la liaison en mode direct D2D entre deux stations de base améliorées. Il est ainsi possible d'allouer des ressources plus importantes, non limitées par le débit relativement faible qui est prévu pour ces communications en mode D2D dans les normes LTE, spécifiquement pour la communication en mode direct établie entre deux terminaux de liaisons dUE respectivement associés à des stations de bases améliorées de deux structures mobiles distinctes.

Plus spécifiquement, l'allocation de ressources radio dédiées à l'établissement d'une liaison en mode direct repose sur l'utilisation d'unités de ressource radio appelées « blocs radio » ou RB (de l'anglais *«Radio Block* »)*.* En effet, classiquement, dans les communications réalisées entre une eNodeB et un ou plusieurs UE, le spectre de fréquence utilisé est divisé en blocs radio qui sont l'unité primaire de ressources de transport de données, définie en fréquence et/ou en temps, utilisée pour les communications radio. Or, tout ou partie de ces blocs radio ne sont pas nécessairement utilisés par une eNodeB pour les communications avec les différentes UEs de sa cellule.

Ainsi, l'invention comporte l'utilisation de tout ou partie d'un RB. La notion de RB correspond à une découpe fréquence*temps du LTE en mode OFDM. L'homme du métier comprendra qu'elle peut porter d'autre nom selon les technologies mais que le principe d'application reste le même.

La ressource utilisée peut alors n'être qu'une partie de ce RB. En particulier, la ressource utilisée est tout ou partie d'un RB dédié à l'origine à du transfert de donnée en UL ou DL pour des utilisateurs de type Uu (LTE) à partir d'une station de base. En particulier, les ressources radio allouée peuvent correspondre une partie des RB utiles aux fonction PUSCH et PDSCH (« Physical UL/DL Data Shared Channels » en terminologie anglosaxonne).

L'utilisation de radio blocs permet avantageusement de faciliter la segmentation des ressources, notamment de dédier seulement une partie desdits Radio Blocks aux terminaux mobiles (communication Uu) en fonction du temps. Ainsi, de façon préférée, tout ou partie des Radio Blocks dédiés à l'origine à du transfert de donnée en UL ou DL pour des utilisateurs de type Uu (LTE) à partir d'une station de base est affecté à la liaison en mode direct. Cette réaffectation est quasi transparente pour les utilisateurs Uu excepté une réduction possible du débit.

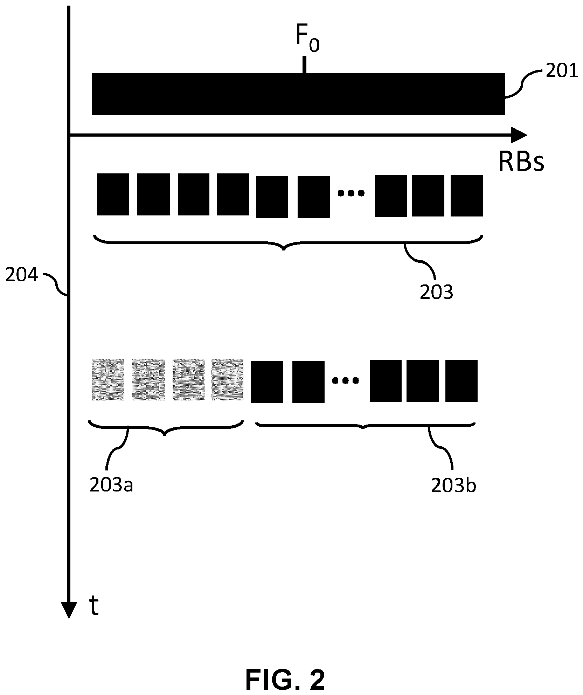

L'invention propose donc de permettre aux terminaux de liaison dUEs de détourner les blocs radio que les eNodeBs n'utilisent pas pour communiquer avec les UEs se trouvant dans la même cellule par l'intermédiaire de leur interface LTE-Uu, afin de les utiliser pour l'établissement d'une liaison en mode direct D2D entre deux stations de base améliorées. Plus précisément, la station de base eNodeB comprise dans la station de base améliorée de chaque structure mobile exclut de son interface de communication LTE-Uu des blocs radio qui peuvent alors être utilisés pour former une liaison en mode direct D2D de type backhaul entre les deux structures mobiles. Ces blocs radio peuvent être contigus entre eux dans le domaine fréquentiel et/ou dans le domaine temporel (comme dans l'exemple représenté à la figure 2 qui sera décrite plus bas), ou être distribués dans le domaine fréquentiel en particulier le spectre fréquentiel UL ou DL, et/ou dans le domaine temporel parmi ceux qui restent alloués à l'interface de communication LTE-Uu. Comme il a déjà été évoqué plus haut, toutes ces opérations d'allocation de ressources radio du type blocs radio peuvent être commandées par le RRCE qui est également compris dans la station de base améliorée de chaque structure mobile selon l'invention.

Finalement, l'invention procure donc un système pour la communication en mode direct établi entre deux structures mobiles distinctes. Le terme système désigne, au sens de la présente description, l'ensemble des stations de base améliorées qui interopèrent sur un même spectre de fréquence. Ainsi, certaines des divisions du spectre de fréquence sont utilisées pour des communications usuelles dans le cadre d'un réseau LTE, et d'autres divisions permettent l'établissement de communications en mode direct D2D entre deux structures mobiles. Ainsi, même lorsque le lien radio est perdu avec le cœur de réseau EPC, des structures mobiles qui se trouvent à portée radio l'une de l'autre peuvent communiquer entre elles en mode direct D2D, grâce à ce qui constitue des liens de type backhaul. La solution proposée selon des modes de réalisation de l'invention pour établir des liaisons en mode direct par « vol » de blocs radio normalement réservés à l'interface de communication cellulaire (i.e., l'interface LTE-Uu dans l'exemple), présente notamment l'avantage supplémentaire de permettre d'établir des liaisons pour l'échange de données selon une interface radio (et notamment un protocole) qui peut se départir des normes LTE. En outre ce réseau de type backhaul peut, par exemple, se construire avantageusement selon une topographie maillée.

La **figure 2** montre de façon schématique la répartition des blocs radios utilisés pour les différentes communications qui peuvent être établies par ou avec une structure mobile selon des modes de réalisation de l'invention.

Comme il a déjà été dit plus haut, le spectre de fréquence 201 est centré sur une fréquence déterminée F₀ et est divisé en blocs radio 203. Comme l'illustre la flèche 204 symbolisant l'axe des temps, à l'origine ceux-ci sont uniquement utilisables par les eNodeBs pour les communications, établies sur l'interface LTE-Uu, avec les UEs présents dans leur cellule. Dans un second temps, une partie 203a des blocs radio est allouée à l'établissement d'un (ou plusieurs) lien(s) en mode direct (D2D) entre les deux terminaux de liaison dUE appartenant aux stations de base améliorées respectives de deux structures mobiles distinctes, alors que l'autre partie de blocs radio 203b reste allouée aux communications, sur l'interface LTE-Uu, avec les UEs situés dans la cellule de l'eNodeB et raccordés à cette station de base.

Avantageusement, du point de vue des UEs qui sont présents dans la cellule de l'eNodeB, cette utilisation des ressources radio pour l'établissement d'un lien en mode direct D2D avec une autre structure mobile peut être transparente. En effet, lorsque les ressources radios utilisées pour le lien en mode direct sont à l'origine inutilisées, aucun effet n'est perceptible pour les entités du réseau LTE « classiques » dont font partie les UEs.

L'allocation de blocs radio pour la communication en mode direct entre des structures mobiles, qui est réalisée par les eNodeBs desdites structures mobiles sous la commande des entités RRCE, est statique jusqu'à une éventuelle reconfiguration du système. En effet, cette allocation de ressources implique une configuration préalable de chaque dUE. En outre, selon les modes de réalisation, le dUE peut-être un équipement spécifique possédant sa propre chaîne radio ou bien être une entité virtuelle utilisant la chaîne radio de l'eNodeB comprise dans la même station de base évoluée.

Comme il a déjà été évoqué plus haut, certains modes de réalisation rendent possible d'établir, à partir d'une structure mobile équipée d'une station de base améliorée, qui est mobile, des liaisons en mode direct avec une pluralité d'autres structures mobiles. Par exemple, dans le cas d'un navire établissant des liaisons en mode direct avec d'autres navires, celui-ci pourrait établir plus de 3, de préférence plus de 4, par exemple 6 liaisons en mode direct, notamment dans le cas d'une eNodeB comportant trois cellules, chacune desdites cellules étant en capacité d'établir deux liens de transport de données. Bien entendu, le nombre de liaisons en mode direct ne saurait être limité à six liaisons. En effet, selon la disponibilité des blocs radios des équipements d'utilisateur dédiés, il sera possible d'établir un nombre plus important de liaisons à partir d'une cellule d'une eNodeB.

Dans ce cas, les blocs radio qui sont exclus de la liaison de communication LTE-Uu pour pouvoir être utilisés afin d'établir la liaison en mode direct entre les dUEs de stations de base améliorées respectives, sont d'abord subdivisés en 2, 3, 4 ou 5 ensembles de blocs radio, par exemple, de manière à pouvoir établir des liaisons en mode direct avec 2, 3, 4 ou 5 autres navires. Ceci permet de réaliser un réseau backhaul avec une topologie maillée, pour la communication en mode direct entre les navires d'une flottille comprenant deux à six navires se trouvant à portée radio les uns des autres.

Dans une configuration réseau backhaul avec une topologie maillée, au moins deux structures mobiles se trouvent à une distance l'une de l'autre suffisamment proche pour permettre à certains de leurs équipements radio, et en particulier, à des équipements d'utilisateur dédiés, de communiquer ensemble. Cette distance est définie par la puissance d'émission respective de chacun des équipements radio destinés à établir des liaisons de communication. Or, chaque station de base dessert une zone géographique définie par l'étendue de sa couverture radio (i.e. une zone de couverture radio, ou cellule), dans laquelle des liaisons de communication radio cellulaire sont établies entre ladite station de base et des terminaux mobiles respectifs. De plus, chaque zone de couverture radio d'une station de base donnée est susceptible de se recouvrir partiellement ou totalement avec une zone de couverture radio d'une autre station de base, du fait de la mobilité de tout ou partie des stations de base du système. Ceci peut donner lieu à des interférences entre des liaisons de communication radio établies par une station de base, et celles établies par l'autre station de base potentiellement sur les mêmes bandes de fréquence.

Une station de base peut ainsi être agencée afin de permettre la régulation de la puissance d'émission de stations de base de structures mobiles tierces situées dans l'environnement immédiat les unes des autres, de manière à réduire les interférences dans la zone de recouvrement entre les zones de couverture radio respectives de chaque station de base, tout en optimisant le zone de couverture radio totale desservie par les différentes stations de base concernées. En outre, la station de base peut aussi être agencée pour adapter la puissance d'émission des stations de base de structures mobiles tierces dans une situation où les différentes structures mobiles sont reliées entre elles par une liaison de communication de type en mode direct.

L'homme du métier appréciera que, selon les spécificités propres à chaque application, la station de base eNodeB peut allouer plus de ressources radio au total (i.e., plus de blocs radio RBs) aux liaisons en mode direct, en prélevant ces RBs parmi les RBs utilisables à l'origine pour les liaisons sur l'interface LTE-Uu, afin d'assurer un meilleur débit utile aux communications en mode direct entre les stations de base des structures mobiles. Notamment, l'allocation de ressources radio aux liaisons en mode direct peut être assujettie à la détection préalable de structures mobiles tierces par l'intermédiaire d'un scanner radio de la structure mobile ou encore l'établissement d'une liaison de transport de données de type backhaul qui relie directement entre eux les équipements radio de plusieurs structures mobiles. Cela requiert bien évidemment de connaître certaines informations relatives aux autres entités avec lesquelles une telle liaison peut être établie, pour initier l'établissement et/ou permettre le bon fonctionnement de la liaison.

Une telle structure mobile peut ainsi comprendre un scanner radio embarqué ayant des moyens de mesure d'un signal radiofréquence émis dans un spectre de fréquence déterminé, par au moins une structure mobile tierce située à portée dudit scanner radio de la structure mobile, et étant configuré pour déterminer, sur la base de propriétés physiques du signal radiofréquence mesuré, des informations associées à l'utilisation du spectre de fréquence déterminé, pour des transmissions radio, émises par la structure mobile tierce.

Il est ainsi possible de détecter la présence d'une structure mobile tierce, ou encore de déterminer la distance de séparation avec cette structure mobile tierce, de déterminer aussi les ressources radio fréquentielles utilisées par tous les équipements radio situés à portée du scanner radio de la structure mobile et enfin, d'identifier, le cas échéant, une structure mobile tierce avec laquelle une liaison de transport de données de type backhaul est susceptible d'être établie.

Une structure mobile, équipée d'un scanner radio, susceptible d'établir une telle liaison est capable de déterminer qu'une structure mobile tierce, avec laquelle elle pourrait établir une liaison de transport de données, se trouve ou non à portée de ses propres équipements radio. Autrement dit, la structure mobile dispose de moyens lui permettant de savoir si une structure mobile tierce entre ou sort d'une zone, qui est située à portée du scanner radio, et dans laquelle ladite structure mobile tierce est éligible à l'établissement d'une liaison de transport de données de type backhaul.

En outre, la structure mobile qui établit une liaison de transport de données peut également, déterminer si la structure mobile tierce avec laquelle elle établit cette liaison s'éloigne d'elle, se rapproche d'elle ou reste à distance constante. Ceci permet, d'une part, que la mise en place de la liaison de transport de données soit optimisée compte-tenu de cette distance et, d'autre part, que les paramètres de cette liaison (comme la puissance radio) soient adaptés à la distance qui sépare réellement la structure mobile de la structure mobile tierce.

En second lieu, lorsqu'une structure mobile tierce susceptible d'établir une telle liaison est détectée dans l'environnement, c'est-à-dire à portée radio, de la structure mobile, un scanner radio équipant une structure mobile permet d'identifier cette structure mobile tierce. En particulier, lorsque la structure mobile est embarquée dans un premier navire et lorsque la structure mobile tierce est un équipement radio embarquée dans un autre navire, l'identification peut alors conditionner tout établissement d'une liaison de transport de données de type backhaul entre les deux. En effet, en fonction du fait que le second navire est un navire ami, ennemi ou neutre, l'établissement d'une liaison de transport de données de type backhaul peut être souhaitable ou non.

Enfin, l'utilisation d'un tel scanner radio permet de prendre en compte des informations qui sont importantes pour l'établissement d'une liaison de transport de données de type backhaul performante, à savoir des informations relatives à l'utilisation qui est faite du spectre de fréquence par les différents équipements radios qui sont présents dans l'environnement immédiat de la structure mobile. En effet, les communications d'une station de base avec les terminaux mobiles de sa cellule sont réalisées dans un spectre de fréquence déterminé. Ce spectre de fréquence, typiquement une bande de fréquence normalisée selon la norme LTE du consortium 3GPP, est composée d'au moins une bande de fréquence ayant une fréquence centrale et une largeur spectrale déterminées. Dès lors que ce spectre de fréquence est utilisé pour plusieurs communications en même temps, il devient nécessaire de répartir au mieux les fréquences utiles disponibles entre les différentes communications afin d'optimiser les performances de chacune d'elle et éviter ou limiter la survenue d'interférences. Or, ce spectre de fréquence peut être utilisé pour les communications de chaque station de base de chaque structure mobile avec les terminaux de sa cellule et aussi pour l'établissement d'une liaison de transport de données de type backhaul entre plusieurs structures mobiles.

Dit autrement, un fonctionnement optimal d'une liaison de ce type implique une répartition optimisée des ressources radio utilisées par tous les équipements radio à portée radio de la structure mobile. Or, une répartition optimisée repose sur une connaissance précise de l'utilisation du spectre de fréquence faite par tous les équipements radio à portée radio de la structure mobile et susceptibles d'utiliser tout ou partie de ce spectre. L'utilisation d'un scanner radio permet donc à une entité de commande de gérer l'utilisation (notamment l'allocation) des ressources radio dans le spectre sur la base des informations obtenues grâce audit scanner radio.

Dans un mode de réalisation particulier, les liaisons en mode direct établies entre les terminaux de liaison de deux structures mobiles distinctes peuvent impliquer des échanges de données avec un partage du temps d'émission de chaque terminal de liaison qui est asymétrique, en ce sens que le temps d'émission d'un terminal de liaison diffère de celui de l'autre terminal de liaison. Dans un exemple, le ratio fixé est de deux tiers du temps environ pour un terminal de liaison et un tiers du temps environ pour l'autre terminal de liaison.

Dans un autre mode de réalisation particulier, le terminal de liaison associé à une structure mobile donnée peut être configuré pour établir une pluralité de liaisons en mode direct de type backhaul suivant une configuration multicast. Cela est particulièrement pour la signalisation nécessaire à l'établissement des échanges, typiquement découverte puis identification voire pour l'authentification. Dans une telle configuration, un premier terminal de liaison est l'unique émetteur des communications directes vers les terminaux de liaison respectifs des autres structures avec lesquelles sont établies les liaisons en mode direct. Une structure mobile peut ainsi diffuser des données simultanément à une pluralité d'autres structures mobiles, sans que cela implique un échange de données protocolaire comme en particulier un envoi de données en diffusion multicast sans signalisation supplémentaire nécessaire.

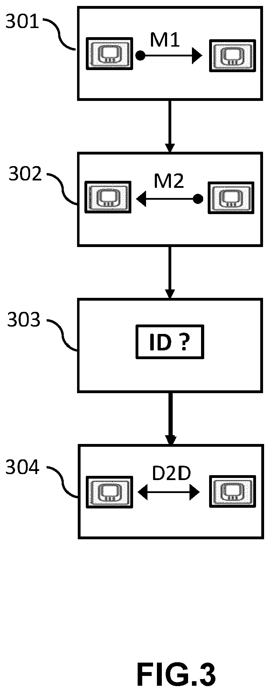

En référence à la **figure 3****,** il va maintenant être décrit des modes de mise en œuvre d'un procédé selon l'invention. Le procédé est exécuté par un système tel que celui qui est décrit plus haut en référence aux figures 1 et 2. De préférence, chacun des utilisateurs (e.g. structure mobile) du système ont préalablement été identifiés.

Dans une étape 301, un premier terminal de liaison dUE d'une station de base améliorée d'une structure mobile donnée, émet un premier message M1 dit message d'identification/authentification. Ce message est émis sur des ressources radio de la station de base évoluée eNodeB comprise dans la station de base améliorée, de type blocs radio RBs, qui sont non utilisables pour la liaison de communication avec les terminaux mobiles (via l'interface LTE-Uu). Ce premier message est destiné à permettre l'établissement d'une liaison en mode direct avec un ou plusieurs autres terminaux de liaison dUE, d'une autre structure mobile. Ce premier message est de préférence émis en mode multicast pour plus d'efficacité.

Lors d'une deuxième étape 302, le terminal de liaison émetteur du message M1 reçoit à son tour un second message M2 d'identification/authentification provenant du terminal de liaison dUE de la seconde station de base améliorée de la structure mobile réceptrice du premier message M1 d'identification/authentification émis.

Lors d'une troisième étape 303, les données contenues dans le second message M2 d'identification/authentification sont transmises à un RRCE de la station de base améliorée qui comprend le terminal de liaison dUE. Ces données sont vérifiées par le RRCE pour établir leur validité ou non. Par exemple, elles peuvent être comparées à des données d'identification/authentification comprises dans une mémoire de la station de base améliorée identifiant les structures mobiles qui sont autorisées à établir une liaison en mode direct avec la structure à laquelle appartient le terminal de liaison dUE en question. Ces données peuvent être, par exemple, de type SIM (de l'anglais « Subscriber Identity Module »). En outre, les données d'authentification contenues dans les messages M1, M2 d'identification/authentification peuvent être obtenues à partir des bases de données de type HSS des EPC locaux des différentes stations de base évoluées.

Enfin, lors d'une dernière étape 304, après la validation de l'authentification du terminal de liaison appartenant à une autre structure (donc après l'authentification de la structure mobile elle-même), un lien en mode direct L adapté pour être utilisé comme un lien d'un réseau de type backhaul est établi entre le premier terminal de liaison dUE et le second terminal de liaison dUE de l'autre structure authentifiée.

## Revendications

1. Système de communication comprenant au moins deux stations de base améliorées (101,102) ayant chacune des terminaux de communication mobiles (111, 112) et au moins une station de base (103, 104) qui est adaptée pour établir des liaisons de communication cellulaire avec lesdits terminaux de communication mobiles (111, 112) de la station de base améliorée (101,102) via une interface radio déterminée (LTE-Uu) en allouant des ressources radio auxdites liaisons de communication cellulaire parmi un ensemble de ressources radio disponibles (203),
dans lequel chaque station de base améliorée (101,102) comprend en outre une entité de liaison (109, 110) configurée pour établir une liaison en mode direct (D2D) avec l'entité de liaison (109, 110) de l'autre station de base améliorée (101,102) ; et,
dans lequel la station de base (103, 104) d'une station de base améliorée (101,102) au moins est configurée pour exclure de l'allocation à des liaisons de communication cellulaire, une partie (203a) des ressources radio disponibles (203), et pour affecter des ressources radio ainsi exclues à l'allocation à une liaison en mode direct (D2D) établie avec la station de base (103, 104) de l'autre station de base améliorée (101,102) par l'intermédiaire des entités de liaison (109, 110) respectives desdites stations de base améliorées (101,102), pour l'échange de données sous protocole IP entre lesdites stations de base (103, 104), via une interface radio distincte de l'interface radio utilisée pour les liaisons de communication cellulaire.

2. Système selon la revendication précédente, dans lequel l'interface radio est sélectionnée parmi toute interface radio permettant d'allouer des ressources radio comprenant des blocs radios.

3. Système selon l'une des revendications 1 ou 2, dans lequel l'entité de liaison (109, 110) d'une station de base améliorée (101,102) est un terminal de liaison comprenant des ressources matérielles et des ressources logicielles propres.

4. Système selon l'une des revendications 1 ou 2, dans lequel l'entité de liaison (109, 110) d'une station de base améliorée (101,102) est un terminal de liaison comprenant des ressources logicielles mises en œuvre dans la station de base (103, 104) de ladite station de base améliorée (101,102), ainsi que des ressources matérielles de ladite station de base (103, 104).

5. Système selon l'une quelconque des revendications précédentes dans lequel l'interface radio utilisée pour établir une liaison en mode direct (D2D) entre la station de base (103, 104) d'une station de base améliorée (101,102) et la station de base (103,104) de l'autre station de base améliorée (101,102) via les entités de liaison (109, 110) respectives desdites stations de base améliorées (101,102), comprend des ressources radio (203a) détournées des canaux descendants de l'interface radio (LTE-Uu) utilisée pour les liaisons de communication cellulaire.

6. Système selon l'une quelconque des revendications précédentes, dans lequel la station de base (103, 104) de chaque station de base améliorée (101,102) est configurée pour établir des liaisons en mode direct (D2D) avec les stations de base (103, 104) respectives d'une pluralité d'autres stations de base améliorées (101,102) via les entités de liaison (109, 110) respectives desdites stations de base améliorées (101,102).

7. Système selon la revendication précédente, dans lequel les entités de liaison (109, 110) de la pluralité de stations de base améliorées (101,102) forment entre elles un réseau de backhaul permettant d'établir une topologie maillée.

8. Système selon l'une des revendications 6 et 7, dans lequel la station de base (103, 104) d'une station de base améliorée (101,102) est configurée pour établir une liaison en mode direct (D2D) avec les stations de base (103, 104) respectives d'une pluralité d'autres stations de base améliorées (101,102), via les entités de liaison (109, 110) respectives desdites stations de base améliorées (101,102), suivant une configuration multicast.

9. Système selon l'une quelconque des revendications 6 à 8, dans lequel les ressources radio de la station de base (103, 104) d'une station de base améliorée (101,102) qui sont exclues de l'allocation à des liaisons de communication cellulaire avec des terminaux de communication mobile (111, 112) de ladite station de base améliorée (101,102), sont subdivisées en au moins deux, de préférence au moins trois ensembles de ressources radio, qui peuvent être allouées pour chaque ensemble de ressources radio à des liaisons en mode direct (D2D) avec la station de base (103, 104) de l'une respective des autres stations de base améliorées (101,102).

10. Système selon l'une quelconque des revendications précédentes, dans lequel les liaisons entre les stations de base (103, 104) respectives de stations de base améliorées (101,102) qui sont établies en mode direct (D2D) via les entités de liaison (109, 110) desdites stations de base améliorées (101,102), sont utilisées en mode semi duplex (en anglais « half duplex ») avec partage, symétrique ou asymétrique, du temps d'émission et de réception pour chaque entité de liaison (109, 110).

11. Système selon la revendication précédente, dans lequel une station de base améliorée (101,102) comprend en outre une entité de commande (107, 108) qui est configurée pour commander l'allocation, par la station de base (103, 104) de ladite station de base améliorée (101, 102), des ressources radio de ladite station de base (103, 104) à la fois pour les liaisons de communication cellulaire avec des terminaux de communication mobiles (111, 112) de la station de base améliorée (101,102) en utilisant l'interface radio (LTE-Uu) de ladite station de base (103, 104), et pour une liaison en mode direct (D2D) pour l'échange de données sous protocole IP avec la station de base (103, 104) d'une autre station de base améliorée (101,102) au moins.

12. Système selon la revendication précédente, dans lequel au moins une des stations de base améliorées est placée sur une structure mobile, de préférence chacune des stations de base améliorées sont placées sur des structures mobiles respectives.

13. Procédé d'établissement d'une liaison pour l'échange de données sous protocole IP entre des stations de base respectives de stations de base améliorées (101,102) ayant chacune des terminaux de communication mobile et au moins une station de base qui est adaptée pour établir des liaisons de communication cellulaire avec des terminaux de communication mobiles (111, 112) de la station de base améliorée via une interface radio déterminée (LTE-Uu) en allouant des ressources radio auxdites liaisons de communication cellulaire parmi un ensemble de ressources radio disponibles, ledit procédé comprenant les étapes suivantes :
- émission (301) par une entité de liaison (109, 110) d'une première station de base améliorée (101,102), d'un premier message (M1) d'identification/authentification à destination d'une entité de liaison (109, 110) d'une seconde station de base améliorée (101,102), ledit message (M1) étant émis en utilisant des ressources radio de la station de base (103, 104) de la première station de base améliorée (101,102) qui appartiennent à une partie (203a) et une partie seulement des ressources radio de la station de base (103, 104) de la première station de base améliorée (101,102) qui sont exclues de l'allocation par ladite station de base (103, 104) à des liaisons de communication cellulaire avec des terminaux de communication mobile (111, 112) de ladite station de base améliorée (101,102) ;
- réception (302), par l'entité de liaison (109, 110) de la première station de base améliorée (101,102), d'un second message (M2) d'identification/authentification qui est émis en réponse par l'entité de liaison (109, 110) de la seconde station de base améliorée (101,102) en utilisant des ressources radio d'une station de base (103, 104) de la seconde station de base améliorée (101,102) qui sont exclues de l'allocation par ladite station de base (103, 104) à des liaisons de communication cellulaire avec des terminaux de communication mobile (111, 112) de la seconde station de base améliorée (101,102) ;
- transmission (303), par l'entité de liaison (109, 110) de la première station de base améliorée (101, 102), du second message (M2) d'identification/authentification à une entité de commande (107, 108) de la première station de base améliorée (101,102) et vérification par ladite entité de commande de la validité des données associées audit second message (M2) d'identification/authentification ; et, en cas de validité,
- établissement (304) d'une liaison en mode direct (D2D) entre la station de base (103, 104) de la première station de base améliorée (101,102) et la station de base (103, 104) de la seconde station de base améliorée (101,102), par l'intermédiaire des entités de liaison (109, 110) respectives desdites première et seconde stations de base améliorées (101,102), pour l'échange de données sous protocole IP entre lesdites stations de base (103, 104), en utilisant des ressources radio, de la station de base (103, 104), qui sont exclues de l'allocation par ladite station de base (103, 104) à des liaisons de communication cellulaire avec des terminaux de communication mobile (111, 112) desdites stations de base améliorées (101,102).

14. Procédé selon la revendication précédente dans lequel les messages (M1, M2) d'identification/authentification échangés entre des entités de liaison (109, 110) sont basés sur des données contenues dans des bases de données de type HSS d'EPC locaux (105, 106) respectivement compris dans les stations de base améliorées (101,102) qui comprennent la station de base (103, 104) et les terminaux de communication mobile (111, 112) desdites première et seconde stations de base améliorées (101, 102), respectivement.
